Europäisches Patentamt

European Patent Office

Office européen des brevets

(19)

(11) Publication number: **0 237 227**
**A1**

## (12) EUROPEAN PATENT APPLICATION

(21) Application number: **87301607.5**

(22) Date of filing: **24.02.87**

(51) Int. Cl.³: **A 01 N 53/00**
**//(A01N53/00, 47:18)**

(30) Priority: **13.03.86 GB 8606262**
**13.03.86 GB 8606263**

(43) Date of publication of application:
**16.09.87 Bulletin 87/38**

(84) Designated Contracting States:
**AT BE CH DE FR GB GR IT LI LU NL SE**

(71) Applicant: **IMPERIAL CHEMICAL INDUSTRIES PLC**
**Imperial Chemical House Millbank**
**London SW1P 3JF(GB)**

(72) Inventor: **Perrin, Robert Michael**
**34 Liscomb Birch Hill**
**Bracknell Berkshire(GB)**

(72) Inventor: **Ruscoe, Colin Nigel Edward**
**The Coach House Braywick**
**Maidenhead Berkshire(GB)**

(72) Inventor: **Gibson, Richard William**
**Rosario 13 Meadow Walk**
**Harpenden Herts(GB)**

(74) Representative: **Hardman, Carol Pauline et al,**
**Imperial Chemical Industries PLC Legal Department:**
**Patents PO Box 6 Bessemer Road**
**Welwyn Garden City Herts, AL7 1HD(GB)**

(54) Insecticidal compositions.

(57) Methods for preventing aphid transmitted virus infections in plants and for controlling or eliminating aphids by the application to the plant or to the aphid or its environment of 2-dimethylamino-5, 6-dimethyl pyrimidin–4–yl dimethyl carbamate (Compound A) and a pyrethroid, in particular cyhalothrin.

Insecticidal compositions comprising Compound A and certain pyrethroids in combination with a diluent or carrier are also described and claimed.

EP 0 237 227 A1

# INSECTICIDAL COMPOSITIONS

This invention relates to aspects of insect and virus control in plants and to certain compositions for use in this field.

UK Patent No. 1,181,657 describes inter alia the compound 2-dimethylamino-5,6-dimethylpyrimidin-4-yl dimethyl carbamate (hereinafter referred to as Compound A), together with processes for its preparation and its use as an insecticide.

Published European Patent No. 0017738 discloses insecticidal and miticidal compositions containing Compound A, at least one organic phosphorus compound, methyl carbamate compound or pyrethroid and an inert carrier. These compositions are said to be particularly effective against leafhoppers.

The applicants have found that by applying Compound A in combination with a pyrethroid type insecticide, suprisingly beneficial results are obtained in relation to the control of aphids and viruses transmitted by aphids.

According to the present invention, there is provided a method of preventing aphid-transmitted virus infections in plants, which method comprises applying to the plant 2-dimethylamino-5,6-dimethyl pyrimidin-4-yl dimethyl carbamate and a pyrethroid.

Suitable pyrethroids for use in the method include cyhalothrin, permethrin, cypermethrin, fenvalerate, fluorocythrin, deltamethrin, alfoxylate, phenothrin, cyphenothrin, fenpropathrin, cyfluthrin, tralomethrin, tralocythrin, esfenvalerate, fluvalinate, furamethrin, fenfluthrin, fenpyrithrin, phencyclate, tetrallethrin, pyrethrin, cinerin, jasmolin, allethrin, barthrin, dimethrin, bioallethrin, alphamethrin, tetramethrin, resmethrin, bioresmethrin, flumethrin, empenthrin, and
(RS)-cyano-(6-phenoxy-2-pyridyl)methyl (IRS)-trans-3-(4-
tert-butylphenyl)-2,2,-dimethylcyclopropanecarboxylate.

All types of aphid-transmitted viruses including persistent, semi-persistent and non-persistent can be controlled using this method. This is particularly important in crops such as potato and sugar beet where mixtures of virus types occur. Examples of such viruses include beet yellows, potato leaf roll and potato severe mosaic virus (PVY).

The compounds used in the method demonstrate good persistence and thereby control the secondary spread of virus as well as preventing new infections.

The method of the invention may be employed as part of a strategy for overcoming insect resistance to pyrethroids.

The combination of compounds employed in the method have a persistent effect combined with rapid knockdown against aphids. Thus in a further aspect the invention provides a method of controlling or eliminating aphids which method comprises adminstering to the aphid or to the environment thereof an insecticidally effective amount of 2-dimethylamino-5,6-dimethyl pyrimidin-4-yl dimethyl carbamate and a pyrethroid.

Suitable pyrethroids for use in this method are those listed above.

This method is particularly useful in agricultural applications to control aphids in crops. All major species of aphid including green and black aphids can be controlled by this method. A rapid knockdown effect (demonstrated by the inhibition of feeding) whatever the weather conditions and no subsequent recovery of the treated aphid population is apparent using this method.

The combination of compounds employed exhibit several types of aphicidal activity ie, contact, translaminar, fumigant, systemic and repellent or anti-feeding and so serve to control aphids in all parts of the crop canopy.

Preferably the combination of compounds used in the above described method are applied in the form of a single composition comprising a pyrethroid, Compound A and a carrier or diluent.

Certain of the compositions employed in the above described methods are novel and these form part of the invention.

Therefore in a further aspect, the invention provides an insecticidal composition comprising 2-dimethylamino-5,6-dimethyl pyrimidin-4-yl dimethyl carbamate, a pyrethroid selected from cyhalothrin, deltamethrin, fluorocythrin, alfoxylate, phenothrin, cyphenothrin, fenpropathrin, cyfluthrin, tralomethrin, tralocythrin, esfenvalerate, fluvalinate, furamethrin, fenfluthrin, fenpyrithrin, phencyclate, tetrallethrin, pyrethrin, cinerin, jasmolin, barthrin, dimethrin, bioallethrin, alphamethrin, tetramethrin, resmethrin, bioresmethrin, flumethrin, empenthrin, and cyano-(6-phenoxy-2-pyridyl)methyl 2,2-dimethyl-3-(p-t-butylphenyl)cyclopropane carboxylate; and a carrier or diluent.

The applicants have found that by combining Compound A with a pyrethroid an unexpectedly high level of insecticidal activity is observed.

Preferred pyrethroids include cyhalothrin and deltamethrin. A particularly preferred pyrethroid for use in the composition and methods of the invention is cyhalothrin which is referred to hereinafter as Compound B. This pyrethroid, whose chemical name is -cyano-3-phenoxybenzyl-cis-3-(Z-2-chloro-3,3,3-trifluoro-1-propenyl)-3,3,3-trifluoro-1-propenyl)-2,2-dimethylcyclopropane carboxylate, is described in UK Patent No 1601344 (corresponding to US patent No 4, 183, 948) together with its preparation.

Compound B exists in a number of isomeric forms as described in US Patent No 4,510,160 and 4,510,098. All isomeric forms can be employed in the present invention. However preferably a racemic mixture of the enantiomers represented by (S)-⍺-cyano-3-phenoxybenzyl (1R), cis-3-(Z-2-chloro-3,3,3-trifluoro-1-propenyl)-2,2-dimethyl-cyclopropanecarboxylate and (R)-⍺-cyano-3-phenoxybenzyl (1S)-cis-3-(Z-2-chloro-3,3,3-trifluoro-1-propenyl)-2,2-dimethylcyclopropanecarboxylate is employed.

The compositions of the invention are active against a wide range of insect pests. Thus in a further aspect the invention provides a method of controlling or eliminating insect pests, which method comprises administering to the insect or to the environment thereof an insecticidally effective amount of a composition as described above.

The compositions may be in the form of dusting powders or granules wherein the active ingredients are mixed with a solid diluent or carrier. Suitable solid diluents or carriers may be, for example, kaolin, bentonite, kieselguhr, dolomite, calcium carbonate, talc, provided magnesia, Fuller's earth, gypsum, Hewitt's earth, diatomaceous earth and China clay. Compositions for dressing seed, for example, may comprise an agent assisting the adhesion of the composition to the seed, for example, a mineral oil.

The compositions may also be in the form of dispersible powders or grains comprising, in addition to the active ingredients, a wetting agent to facilitate the dispersion of the powder or grains in liquids. Such powders or grains may include fillers, and suspending agents.

The compositions may also be in the form of liquid preparations to be used as sprays which are generally aqueous dispersions or emulsions containing the active ingredients in the presence of one or more wetting agents, dispersing agents, emulsifying agents or suspending agents.

Wetting agents, dispersing agents and emulsifying agents may be of the cationic, anionic or non-ionic type. Suitable agents of the cationic type include, for example, quaternary ammonium compounds, for example, cetyltrimethyl- ammonium bromide. Suitable agents of the anionic type include, for example, soaps, salts of aliphatic monoesters of sulphuric acid, for example sodium lauryl sulphate, salts of sulphonated aromatic compounds, for examle sodium dodecyl-benzenesulphonate, sodium, calcium or ammonium lignosulphonate, butyl-naphthalene sulphonate, and a mixture of the sodium salts of diisopropyl- and triisopropyl- naphthalene sulphonic acids.

Suitable agents of the non-ionic type include, for example, the condensation products of ethylene oxide with fatty alcohols such as oleyl alcohol or cetyl alcohol, or with alkyl phenols such as octylphenol, nonylphenol and octylcresol. Other non-ionic agents are the partial esters derived from long chain fatty acids and hexitol anhydrides, the condensation products of the said partial esters with ethylene oxide, and the lecithins.

Suitable suspending agents are, for example, hydrophilic colloids, for example polyvinylpyrrolidone and sodium carboxymethylcellulose, and the vegetable gums, for example gum acacia and gum tragacanth.

The aqueous dispersions or emulsions may be prepared by dissolving the active ingredient or ingredients in an organic solvent which may contain one or more wetting, dispersing or emulsifying agents and then adding the mixture so obtained to water which may likewise contain one or more wetting, dispersing or emulsifying agents. Suitable organic solvents are toluene, methylnaphthalenes, xylenes, higher alkyl benzenes for example having up to 10 carbon atoms in the alkyl chain(s), trichloroethylene, cyclohexane and isophorone.

The compositions to be used as sprays may also be in the form of aerosols wherein the formulation is held in a container under pressure in the presence of a propellant such as fluorotrichloromethane or dichlorodifluoromethane.

By the inclusion of suitable additives, for example for improving the distribution, adhesive power and resistance to rain or treated surfaces, the different compositions can be better adapted for the various uses for which they are intended.

The compositions which are to be used in the form of aqueous dispersions or emulsions are generally supplied in the form of concentrates containing a high proportion of the active ingredients, the said concentrates to be diluted with water before use. These concentrates are often required to withstand storage for prolonged periods and after such storage, to be capable of dilution with water in order to form aqueous preparations which remain homogeneous for a sufficient time to enable them to be applied by conventional spray equipment. The concentrates may conveniently contain from 10-85% by weight of the active ingredient or ingredients and generally from 25-60% by weight of the active ingredient or ingredients. When diluted to form aqueous preparations, such preparations may contain varying amounts of the active ingredient or ingredients depending upon the purpose for which they are to be used, but an aqueous preparation containing between 0.001% and 1.0% by weight of active ingredient or ingredients may be used.

The ratio of Compound A : pyrethroid employed in the composition is suitably in the range of from 50:1 to 4:1 preferably from 25:1 to 5:1. The rate at which the compositions are applied will depend upon numerous factors including the particular pyrethroid employed, the type of crop treated, the degree of infestation and so on. However in general they will be applied such that the Compound A is present at from 50-250 g/ha and the pyrethroid will be present at from 5-20 g/ha.

The following Examples illustrate the invention.


EXAMPLE 1

A series of compositions were prepared as follows:


(a) Wettable Powder

|  | Percentage w/w |
|---|---|
| Compound A | 15 |
| Compound B | 5 |
| Lignosulphonate dispersant (Vanispeste CB) | 5 |
| Anionic wetting agent (Empicol hZ) | 3 |
| Aromatic solvent (Shellsol E) | 5 |
| Silica | 10 |
| Kaolin | to 100 |


(b) Water Dispersible Grain

| | |
|---|---|
| Compound A | 40 |
| Compound B | 2 |
| Kaolin | 10 |
| Lignosulphonate binder ('Polyfon' H) | 5 |
| Anionic wetter agent ('Aerosol' OTB) | 2.5 |
| Anhydrous sodium acetate | 10 |
| 'Crex' | to 100 |

(c)  Emulsifiable Concrete

| | |
|---|---|
| Compound A | 10 |
| Compound B | 0.5 |
| Anionic/Nonionic Emulsifier | |
| Blend ('Areox' 3404F/3412F) | 10 |
| Isophorone | 10 |
| Xylene | to 100 |

EXAMPLE 2

Leaves infected with BYV were sprayed to 'run-off' with commercial formulations diluted with water, as follows:

1.  deltamethrin @ 0.002% active ingredient

2.  pirimicarb @ 0.03% a.i

3.  heptenophos @ 0.03% a.i

4.  pirimicarb (0.03% a.i) + deltamethrin (0.002% a.i)

5.  heptenophos (0.03% a.i) + deltamethrin (0.002% a.i)

Control leaves were left untreated.  Sprayed leaves were allowed to dry.  Four groups of nine peach-potato aphids (Myzus persicae), highly resistant to insecticides ($R_2$), were caged for 24 hours onto these leaves.  At the end of this period all aphids, including apparently dead ones, were transferred in groups of three to untreated sugar beet seedlings.  On the following day the aphids were killed with pirimicarb.  The number of sugar beet plants infected with BYV was measured later.  The whole experiment was repeated on five occassions.

The results are shown in Table I.

0237227

TABLE I

| Treatment | Total number of sugar beet seedlings infected with BYV (Out of 60) |
|---|---|
| Control | 35 |
| Deltamethrin | 17 |
| Pirimicarb | 6 |
| Heptenophos | 31 |
| Deltamethrin + Pirimicarb | 0 |
| Deltamethrin + Heptenophos | 18 |

EXAMPLE 3

Plots (6 rows x 8m) containing sugar beet (variety-Regina) at the 4-leaf stage of growth were sprayed with various commercial formulations of pirimicarb, cyhalothrin and a mixture of the two. Each treatment was applied to 3 plots. The number of each species of aphids (Aphis fabae and Myzus persicae) on each plant was counted after 2, 7 and 14 days.

The results are shown in Table 2.

TABLE 2

Pre-treatment aphid numbers: 102 Aphis fabae and 58.5 Myzus persicae.

| Treatment | Rate applied in g active ingredient/ha | Total No aphids per plant | | | | | |
|---|---|---|---|---|---|---|---|
| | | Aphis fabae | | | Myzus persicae | | |
| | | Days after spraying | | | | | |
| | | 2 | 7 | 14 | 2 | 7 | 14 |
| Untreated | - | 152 | 245 | 693 | 67 | 90 | 192 |
| Pirimicarb | 140 | 10 | 91 | 356 | 4 | 22 | 44 |
| Primicarb + Cyhalothrin | 100+ 5 | 8 | 90 | 384 | 4 | 7 | 25 |
| Cyhalothin | 5 | 43 | 127 | 357 | 19 | 13 | 30 |

The mixture showed both rapid kill of <u>Myzus</u> <u>persicae</u> as well as good persistence as compared with the individual components. This species is the one primarily responsible for transmitting plant virus.

The effect on <u>Aphis</u> <u>fabae</u> was less marked although the initial effect and persistance was comparable to that of the higher dose of pirimicarb and better than the cyhalothrin alone.

PP 33793
CPH/CF
12 Feb 86

## CLAIMS

1. A method of preventing aphid-transmitted virus infections in plants, which method comprises applying to the plant 2-dimethylamino-5,6-dimethyl pyrimidin-4-yl dimethyl carbamate and a pyrethroid.

2. A method of controlling or eliminating aphids which method comprises administering to the aphid or to the environment thereof an insecticidally effective amount of 2-dimethylamino-5,6-dimethyl pyrimidin-4-yl dimethyl carbamate and a pyrethroid.

3. A method according to claim 1 or claim 2 wherein the pyrethroid is selected from cyhalothrin, permethrin, cypermethrin, fenvalerate, fluorocythrin, deltamethrin, alfoxylate, phenothrin, cyphenothrin, fenpropathrin, cyfluthrin, tralomethrin, tralocythrin, esfenvalerate, fluvalinate, furamethrin, fenfluthrin, fenpyrithrin, phencyclate, tetrallethrin, pyrethrin, cinerin, jasmolin, allethrin, barthrin, dimethrin, bioallethrin, alphamethrin, tetramethrin, resmethrin, bioresmethrin, flumethrin, empenthrin, and (RS)-cyano-(6-phenoxy-2-pyridyl)methyl (IRS)-trans-3-(4-tert-butylphenyl)-2,2-dimethylcyclopropanecarboxylate.

4. A method according to claim 3 wherein the pyrethroid is cyhalothrin or deltamethrin.

5. A method according to any one of claims 1 to 4 wherein the 2-dimethylamino-5,6-dimethyl pyrimidin-4-yl dimethyl carbamate and the pyrethroid are applied in a single composition.

6. An insecticidal composition comprising 2-dimethylamino-5,6-dimethyl pyrimidin-4-yl dimethyl carbamate, a pyrethroid selected from cyhalothrin, deltamethrin, fluorocythrin, alfoxylate, phenothrin, cyphenothrin, fenpropathrin, cyfluthrin, tralomethrin, tralocythrin, esfenvalerate, fluvalinate, furamethrin, fenfluthrin, fenpyrithrin, phencyclate, tetrallethrin, pyrethrin, cinerin, jasmolin, barthrin, dimethrin, bioallethrin, alphamethrin, tetramethrin, resmethrin, bioresmethrin, flumethrin, empenthrin, and (RS)-cyano-(6-phenoxy-2-pyridyl)methyl (IRS)-<u>trans</u>-3-(4-<u>tert</u>-butylphenyl)-2,2-dimethylcyclopropanecarboxylate.

7.   A insecticidal composition comprising 2-dimethylamino-5,6-dimethylpyrimidin-4-yl dimethyl carbamate, $\alpha$-cyano-3-phenoxybenzyl-<u>cis</u>-3-(<u>Z</u>-2-chloro,3,3,3-trifluoro-1-propenyl)-2,2-dimethylcyclopropane-carboxylate and a carrier or diluent.

8.   A composition according to claim 7 wherein the carboxylate compound is in the form of a racemic mixture of the enantiomers represented by (S) -$\alpha$-cyano-3-phenoxybenzyl (IR)-cis-3-(Z-2-chloro-3,3,3-trifluoroprop-1-enyl)-2,2-dimethyl-cyclopropanecarboxylate and (R)-$\alpha$-cyano-3-phenoxybenzyl (IS)-cis-3-(Z-2-chloro-3,3,3-trifluoroprop-1-enyl)-2,2-dimethylcyclopropanecarboxylate.

9.   A method of controlling or eliminating insect pests which method comprises administering to the insect or to the enviroment thereof an insecticidally effective amount of a composition according to any one of claims 6 to 8.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| L | CHEMICAL ABSTRACTS, vol. 106, no. 17, 27th April 1987, page 256, abstract no. 133644s, Columbus, Ohio, US; R.M. PERRIN: "PP321 - a pyrethroid for the control of plant virus vectors", & PROC. - BR. CROP. PROT. CONF.--PESTS DIS. 1986, (3), 989-96 | 1-9 | A 01 N 53/00 // (A 01 N 53/00 A 01 N 47:18 ) |
| X | EP-A-0 017 738 (MITSUI TOATSU CHEMICALS) * Page 3, paragraph 3; claims 1,8 * | 1-9 | |
| X | CENTRAL PATENTS INDEX, BASIC ABSTRACTS JOURNAL, Section C, 28th March 1984, abstract no. 84-026336/05, Derwent Publications Ltd., London, GB; & JP-A-58 216 104 (TAKEDA CHEMICAL IND. K.K.) 15-12-1983 | 1-9 | |
| Y | CHEMICAL ABSTRACTS, vol. 104, no. 9, 3rd March 1986, abstract no. 64069c, Columbus, Ohio, US; C.J. ASJES: "Control of field spread of non-persistent viruses in flower-bulb crops by synthetic pyrethroid and pirimicarb insecticides, and mineral oils", & CROP PROT. 1985, 4(4), 485-93 | 1-9 | |

TECHNICAL FIELDS SEARCHED (Int. Cl.4)

A 01 N

--- -/-

The present search report has been drawn up for all claims

| Place of search | Date of completion of the search | Examiner |
|---|---|---|
| THE HAGUE | 22-06-1987 | NATUS |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

| | DOCUMENTS CONSIDERED TO BE RELEVANT | | Page 2 |
|---|---|---|---|
| Category | Citation of document with indication, where appropriate, of relevant passages | Relevant to claim | CLASSIFICATION OF THE APPLICATION (Int. Cl.4) |
| Y | CHEMICAL ABSTRACTS, vol. 104, no. 17, 28th April 1986, abstract no. 143808w, Columbus, Ohio, US; G.I. ATIRI et al.: "Effects of pyrethroids (cypermethrin and deltamethrin) on the disease expression of cowpea aphid-borne mosaic virus", & AGRIC., ECOSYST. ENVIRON. 1986, 15(1), 31-7 | 1-9 | |
| Y | CHEMICAL ABSTRACTS, vol. 104, no. 21, 26th May 1986, page 207, abstract no. 181608p, Columbus, Ohio, US; R.W. GIBSON et al.: "The use of pyrethroids to protect planting material against aphid-borne viruses", & MONOGR. - BR. CROP PROT. COUNC. 1986, 33(Healthy Plant. Mater.), 155-60 | 1-9 | TECHNICAL FIELDS SEARCHED (Int. Cl.4) |
| Y | CHEMICAL ASTRACTS, vol. 97, no. 1, 5th July 1982, page 237, abstract no. 2250h, Columbus, Ohio, US; D.W.A. BARRETT et al.: "The influence of rate and timing of autumn applied pyrethroid and carbamate insecticide sprays on the control of barley yellow dwarf virus in English and French winter cereals", & PROC. BR. CROP PROT. CONF.-PESTS DIS. 1981, 11th(2), 405-12 | 1-9 | |

--- -/-

The present search report has been drawn up for all claims

| Place of search | Date of completion of the search | Examiner |
|---|---|---|
| THE HAGUE | 22-06-1987 | NATUS |

| | DOCUMENTS CONSIDERED TO BE RELEVANT | | Page 3 | |
|---|---|---|---|---|

| Category | Citation of document with indication. where appropriate, of relevant passages | Relevant to claim | CLASSIFICATION OF THE APPLICATION (Int. Cl.4) |
|---|---|---|---|
| Y | CHEMICAL ABSTRACTS, vol. 104, no. 9, 3rd March 1986, abstract no. 64169k, Columbus, Ohio, US; R.H. FFRENCH-CONSTANT et al.: "Soil contact toxicity of insecticides to the European earwig Forficula auricularia [Dermaptera]", & ENTOMOPHAGA 1985, 30(3), 271-8 | 1-9 | |
| Y | CHEMICAL ABSTRACTS, vol. 89, no. 23, 4th December 1978, page 187, abstract no. 192410r, Columbus, Ohio, US; W. KARG: "Studies on the selectivity of pesticides to useful predatory mites feeding on spider-mites in fruit cultivation", & ARCH. PHYTOPATHOL. PFLANZENSCHUTZ 1978, 14(1), 41-55 | 1-9 | TECHNICAL FIELDS SEARCHED (Int. Cl.4) |
| Y | CHEMICAL ABSTRACTS, vol. 89, no. 7, 14th August 1978, page 129, abstract no. 54380e, Columbus, Ohio, US; R.B. WORKMAN: "Pesticides toxic to striped earwig, an important insect predator", & PROC. FLA. STATE HORTIC. SOC. 1977, (Pub. 1978). 90, 401-2 | 1-9 | |

The present search report has been drawn up for all claims

| Place of search | Date of completion of the search | Examiner |
|---|---|---|
| THE HAGUE | 22-06-1987 | NATUS |